# EUROPEAN PATENT APPLICATION

(11) **EP 3 150 092 A1**
(43) Date of publication of application: **05.04.2017**
(21) Application number: 16190129.3
(22) Date of filing: 22.09.2016
(51) Int. Cl.: A47J 37/12

(54) **APPARATUS FOR AUTOMATED PREPARATION OF COOKED FOOD PRODUCTS**

(30) Priority: 02.10.2015 US 201562236256 P
(71) Applicant: Franke Technology and Trademark Ltd, 6052 Hergiswil (CH)
(72) Inventor: Loss, Itamar, Smyrna, TN Tennessee 37167 (US); Chmayssani, Khalil, Smyrna, TN Tennessee 37167 (US); Bonderer, Jonas, Smyrna, TN Tennessee 37167 (US)
(74) Representative: Lemcke, Brommer & Partner Patentanwälte Partnerschaft mbB

(57) **Abstract**

An apparatus for the automated preparation of cooked food products has a food container for holding the food product during preparation, a dispensing station for controllably dispensing the food product to the food container, a cooking device designed for at least partially accommodating the food container and for heating the food product held by the container; a dumping station, to which the cooked food product is dropped from the food container and a conveyor mechanism for controllably conveying the food container between the dispensing station, the cooking device, and the dumping station.

## Description

### Field of the Invention

The present invention relates to the field of professional kitchen appliances and more particularly to an apparatus for the automated preparation of cooked food products which can be used in foodservice business such as for instance chain restaurants.

In the catering industry such as chain restaurants, the processes of food preparation are typically highly standardized and performance-optimized. However, food preparation requires at various steps manual interaction such as for loading a kitchen appliance with food products to be cooked, unloading the kitchen appliance when the cooking process is completed and for placing the cooked food products into a heat-retaining food holding area. Moreover, the kitchen space in many restaurants is limited so that rational use of space as well as ergonomic arrangement and design of kitchen appliances is decisive for smooth functioning of food preparation processes.

### Summary of the Invention

It is therefore an object of the present invention to provide an apparatus for the automated preparation of cooked food products which may improve efficiency both in terms of processes as well as use of kitchen space.

These and other objects that appear below are achieved by an apparatus for automated preparation of cooked food products having a food container for holding the food product during preparation, a dispensing station for controllably dispensing the food product to the food container, a cooking device designed for at least partially accommodating the food container and for heating the food product held by the container; a dumping station, to which the cooked food product is dropped from the food container and a conveyor mechanism for controllably conveying the food container between the dispensing station, the cooking device, and the dumping station.

In some embodiments, the dispensing station may be arranged above the dumping station, the cooking device may be arranged laterally to the dumping station, and the conveyor mechanism may be arranged to convey the food container along a predefined trajectory extending in vertical and lateral direction.

The arrangement of the dispensing station above the dumping station allows on the one hand a very compact design; on the other hand does it allow dispensing the food products by simply using gravity to fill these into the container placed by the conveyor mechanism below the dispensing station.

Particularly, the food products may be frozen food products and a freezer may be arranged in conjunction with the dispensing station for storing the frozen food products. The dispense station thus dispenses the frozen food products from the freezer into the food container, which is then automatically moved to the cooking device. It is particularly advantageous is the freezer together with the dispensing station is arranged above the dumping station.

The dispensing station may be adapted to portion the food products by weight or by a dispensing time so that the amount of food products prepared during one preparation cycle of the apparatus can be efficiently controlled and adjusted to the capability of the cooking device and to the current need in the restaurant.

In some embodiments, the food container has a drop bottom which is adapted to automatically open and close to dispense and load the food product based on the position of the food container at the conveying mechanism. A drop bottom mechanism allows an easy and safe unloading of the food container at the dumping station.

In one embodiment, the cooking device is a deep fryer. Deep fried food products such as fries, croquettes, or the like are constantly demanded in chain restaurants, taste best if prepared fresh on demand and are thus particularly suited for process automation.

According to another aspect of the invention, the apparatus is provided with a control system which controls the conveyor mechanism to convey the food container to several pre-programmed positions. The control system can be programmed to move the food container to the a dispensing station for loading the container with the food product to be cooked, to move the food container to the cooking device, where the food product is cooked, and to move the food container after a predetermined cooking time to the dumping station.

Preferably, the control system can be programmed to define any of basket positions, dwell times on each position, a conveyor speed, a conveyor direction, a basket shaking, a temperature of a freezer, a product dispensing time, and/or a product dispensing weight. In addition to this, the control system can also be programmed to monitor product availability, and/or alarms of the apparatus and display these to a user.

In another aspect, the control system can be programmed to execute a permanent loop of cooked food production while being in an active state, or a single loop upon receipt of a trigger signal. Thus, depending on the need of the restaurant, the control system controls the apparatus to periodically output freshly cooked food products or it can control the apparatus to prepare individual portions of food products on demand. In the latter case, a trigger signal can for instance be derived from an automatic ordering system of the restaurant.

Furthermore, in case of frozen food products, the control system can additionally be used to control the freezer arranged for storing the food products. In particular, the control system can be programmed to control a temperature, a product volume, and/or product availability within the freezer.

In one embodiment, the food preparation apparatus can further be provided with an automatic salting mechanism arranged for salting the food products in accordance with at least one programmable parameter.

The conveyor mechanism in one embodiment can be implemented using a rotary column with a vertically movable lifting arm, which lifting arm is pivotably connected to the rotary column and holds the food container.

Preferably, the lifting arm is provided with a gear that when the lifting arm pivots around the rotary column simultaneously turns the food container to maintain an orientation thereof.

The conveyor mechanism in another embodiment can be implemented using a guideway with a gear rack curved along the guideway and a gear which engages with the gear rack and wherein the food container suspends from a gear link attached to the gear.

In yet another embodiment, the conveyor mechanism can be implemented with a curved rail, a belt tensioned in a loop along the curved rail, and a motion block slidably held between back and forth guided strands of the belt, wherein the food container suspends from the motion block.

In some embodiments, the apparatus can further be equipped with a debris catcher arranged to catch debris of frozen food products falling through perforations of the food container when the food product is dispensed by the dispensing station into the food container.

### Brief Description of the Drawings

Preferred embodiments of the present invention will now be described with reference to the accompanying drawings in which
- figure 1: an isometric view of an automatic fryer according to a first embodiment;
- figure 2: an isometric view of the fryer of figure 1 from a different aspect angle and with one door of an upper cabinet portion being removed;
- figure 3: an isometric view of a first embodiment of a conveyor mechanism having a rotary column with a vertically movable lifting arm;
- figure 4: a top view on the conveyor mechanism of figure 3 in three different positions;
- figures 5a to 5g: isometric views of the conveyor mechanism of figure 3 in different positions;
- figure 6: an isometric view of a second embodiment of a conveyor mechanism having a curved gear rack;

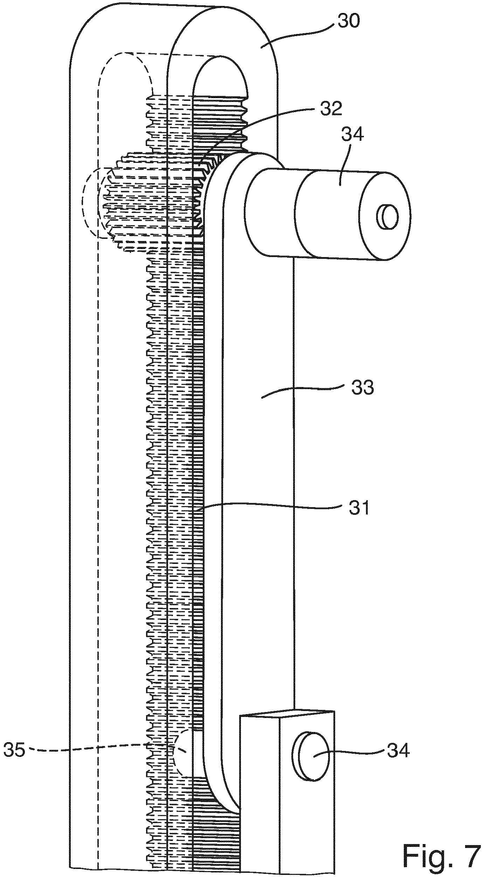

- figure 7: a detail of figure 6 with a gear engaged with the gear rack from which the food container suspends;
- figures 8a-8h: isometric views of the conveyor mechanism of figure 6 in different positions;
- figure 9: an isometric view of a second embodiment of a conveyor mechanism having a looped belt and slider movably arranged between up and down leading strands of the looped belt;
- figure 10: a detail of figure 6 with the slider arranged between the up and down leading strands of the looped belt and a drive pulley arranged to drive the belt;
- figure 11: the looped belt used in the embodiment of figure 9;
- figures 12a-12h: isometric views of the conveyor mechanism of figure 9 in different positions; and
- figure 13: a block diagram of the control system used in one embodiment.

### Detailed Description of Embodiments

The invention described in this document is not limited to the particular systems and methodologies described, as these may vary. The terminology used herein is for the purpose of describing particular embodiments only, and is not intended to limit the scope of the present disclosure.

It should be understood that as used herein and in the appended claims, the singular form "a", "an", and "the" include plural reference unless the context clearly dictates otherwise. Unless defined otherwise, all technical and scientific terms used herein have the same meanings as commonly understood by one ordinary skill in the art. As used herein, the term "comprising" means "including, but not limited to". The term "cooking" as used herein refers to any kind of food preparation using heat, including but not limited to frying, boiling, baking, roasting, broiling, stir-frying, and toasting.

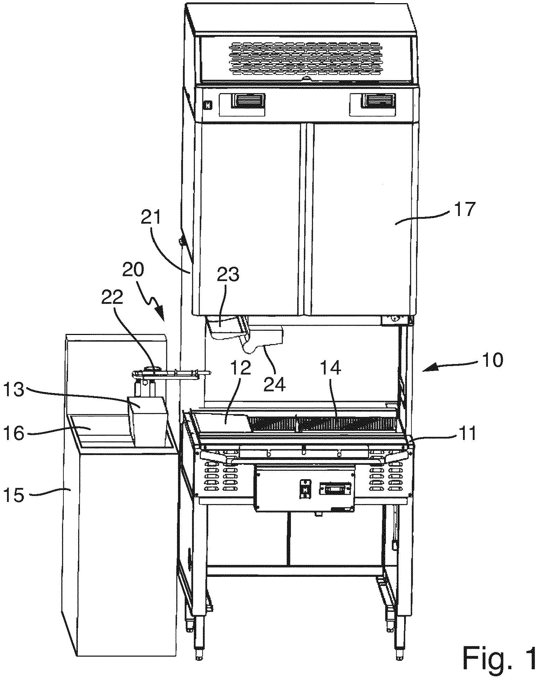

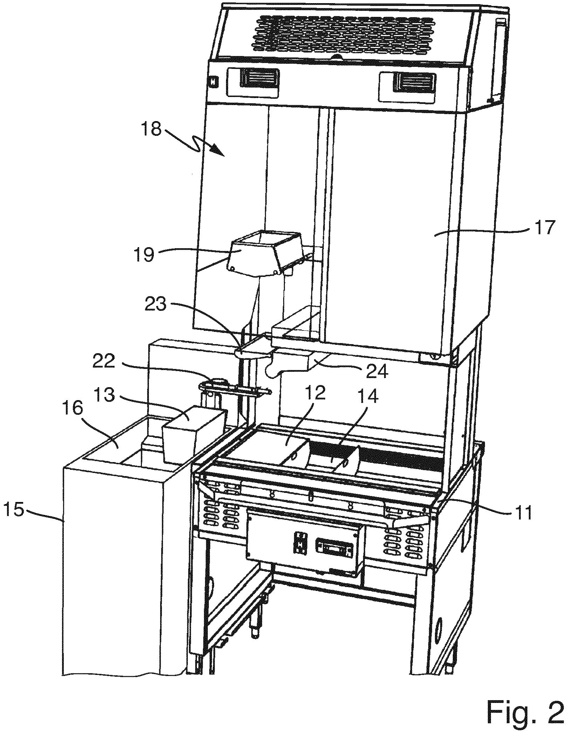

The embodiments described below relate to kitchen appliances for use in the foodservice business such as for instance chain restaurants. In the embodiment shown in figures 1 and 2, the kitchen appliance is an automated frying apparatus for the preparation of fried food products such as French fries, for instance. It contains in a main rack 10 at a worktop level 11 a dumping station 12, where the deep-fried food products are dropped from a food basket 13 and then salted and a hot air holding portion 14 where the ready-to-serve food products are placed and from which they can be taken by the restaurant personnel.

Beside the main rack 10 is the actual fryer 15 with a deep-frying basin 16, into which the food basket 13 can be (at least partly) immersed. The main rack 10 further has an upper cabinet portion 17, which accommodates a freezer 18 for storing refrigerated food products and a dispenser 19, which controllably dispenses refrigerated food products from the freezer 18 into the food basket 13 when the latter is arranged in a loading position below the dispenser 19. Freezer 18 and dispenser 19 can be seen in figure 2, where the left cabinet door of the upper cabinet portion 17 is removed.

A conveyor mechanism 20 serves as a transporter for the food basket 13 and controllably conveys the food basket 13 from below the dispenser 13 into the deep-frying basin 16 and from there to the dumping station 12. As will be explained in more detail below, the conveyor mechanism 20 in the first embodiment contains a rotary column 21. A vertically movable lifting arm 22 is pivotably connected to the rotary column 21 and holds the food basket 13.

Under the upper cabinet portion 17 is a debris catcher 23 and a salting system 24.

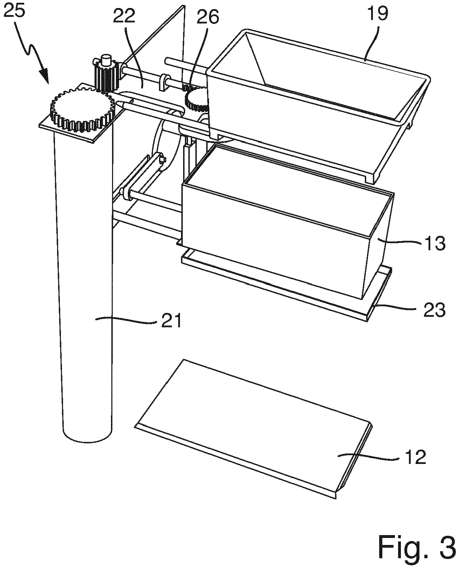

Figure 3 shows the conveyor mechanism 20 in more detail. The food basket 13 suspends from the lifting arm 22, which is pivotably connected to the rotary column or "spindle" 21. Gears 25 and a motor serve to pivot the lifting arm 22 around the rotary column 21. Lifting arm 22 and rotary column 21 are movable in vertical direction. A gear mechanism 26 on the lifting arm 22 turns the food basket 13 relative to the lifting arm simultaneously when the lifting arm 22 pivots around the rotary column 21, so that the food basket 13 maintains its orientation. In addition to this, the food basket 13 has a drop bottom 13' and associated mechanism 27 to controllably open and close the drop bottom 13' in order to dispense and load food products based on the location of the food basket.

In figure 3, the food basket is shown in the loading position placed below the dispenser 19 and the drop bottom 13' is closed. The debris catcher 23, which can be moved in sideways direction, is moved below the food basket to catch any debris and ice crystals falling from the dispenser 19 through the food basket 13. The dumping station 12, where the cooked food products are dropped from the food basket and salted by the salting system 24 is shown idle in figure 3.

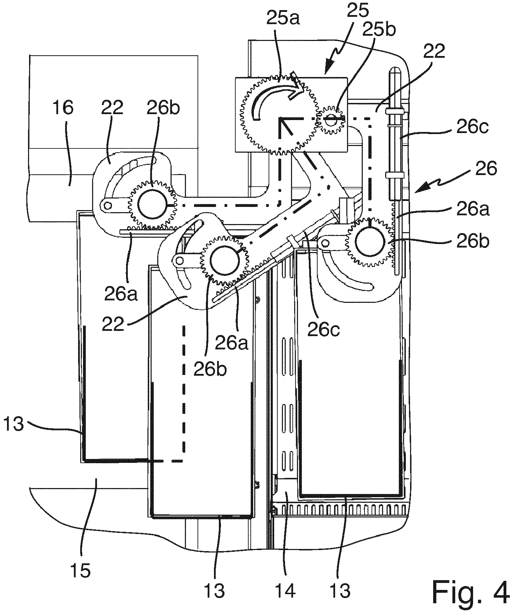

In figure 4, a top view on the lifting arm 22 and the basket 13 is shown in three different positions, a rightmost, a leftmost and an intermediate position of the food basket 13. As can be seen, the gear mechanism 26 on the lifting arm 22 turns the food basket 13 relative to the lifting arm 22 when the latter pivots around the rotary column 21. Through this counter-movement of the food basket 13 relative to the lifting arm 22, the orientation of the food basket 13 is maintained in any position of the lifting arm 22.

The gear mechanism 26 in the embodiment contains a gear rack 26a, an corresponding gear wheel 26b engaged with the gear rack 26a and a linear motor 26, which moves the rear rack 26a to turn the gear wheel 26b and with it the basket 13 relative to the lifting arm 22 when the latter turns. The gears 25, effect turning of the lifting arm 22 around the axis of the spindle 21 contains a main gear wheel 25a and a drive pinion 25b, which is driven by an associated motor (not shown). The angle by which the food basket 13 is turned relative to the lifting arm 22 corresponds - at least substantially - to the angle by which the lifting arm 22 pivots around the spindle axis, but in opposite direction. The two rotary motions are controlled in synchronism in the embodiment by a common controller. As will be appreciated by those skilled in the art, a forced mechanical control would equally be possible through an appropriate coupler mechanism.

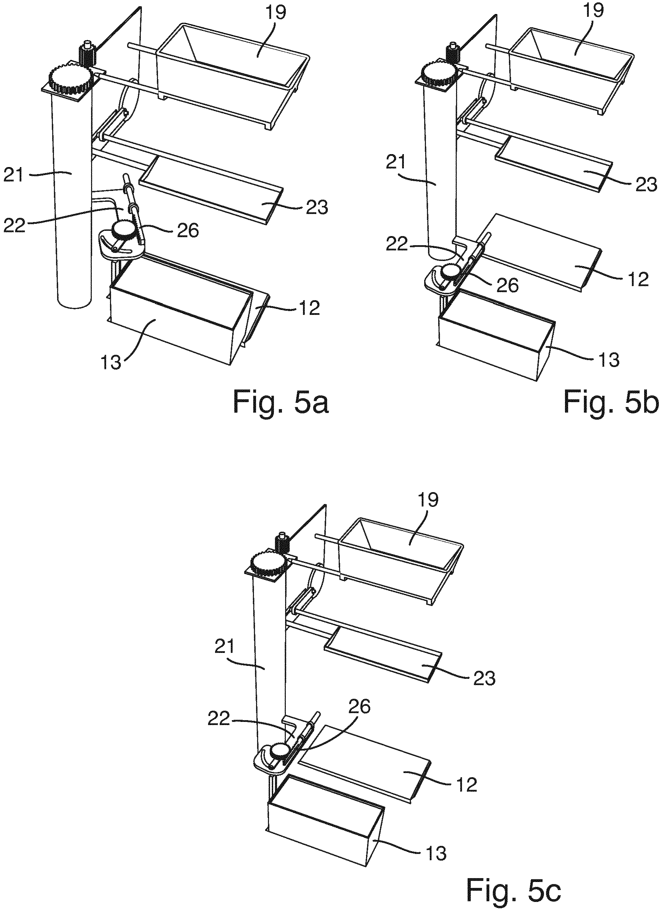

In figures 5a to 5g, the food basket 13 and transport mechanism is shown in different positions during a cooking cycle. In figure 5a, the food basket is shown on its way from the loading position of figure 3 to the cooking position, in which the food basket 13 is immersed into deep-frying basin 16. Figure 5b shows the cooking position with the food basket in its leftmost position lowered into the deep-frying basin 16 (not shown). In figure 5c, the food basket is in a shaking position still in its leftmost position but lifted out of the deep-frying basin 16. In this position, the food basket 13 can be shaken by a fast rocking motion by the drive mechanism, so that frying oil can drip off food product back into the deep-frying basin 16.

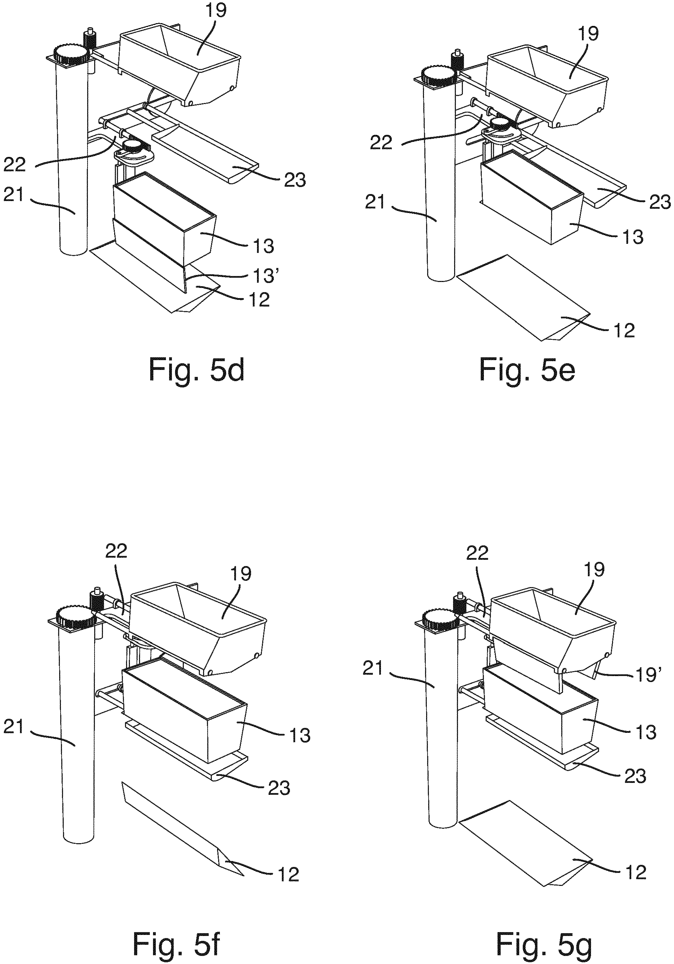

In figure 5d, the food basket 13 is shown in an unloading position with opened drop bottom 13' right above the dumping station 12. The debris catcher 23 has been shifted sideways to the right from a position below the dispenser 19 to an inactive position. In figure 5e, the food basket 13 is shown on its way upwards back into the loading position below the dispenser 19. The debris catcher 23 is still in its inactive position at the right side. In figure 5f, the food basket 13 has reached its loading position under the dispenser 19 and the debris catcher 23 has been moved back to the left below dispenser 19 and food basket 13. The dumping station 12, which is implemented in the embodiment in the form of a flat bowl, is tilted to the right, so that the cooked food products will fall into the hot air holding area 14. In figure 5g, finally, the dispenser 19 opens and dispenses the next raw food products into the food basket 13 and the food preparation cycle starts again.

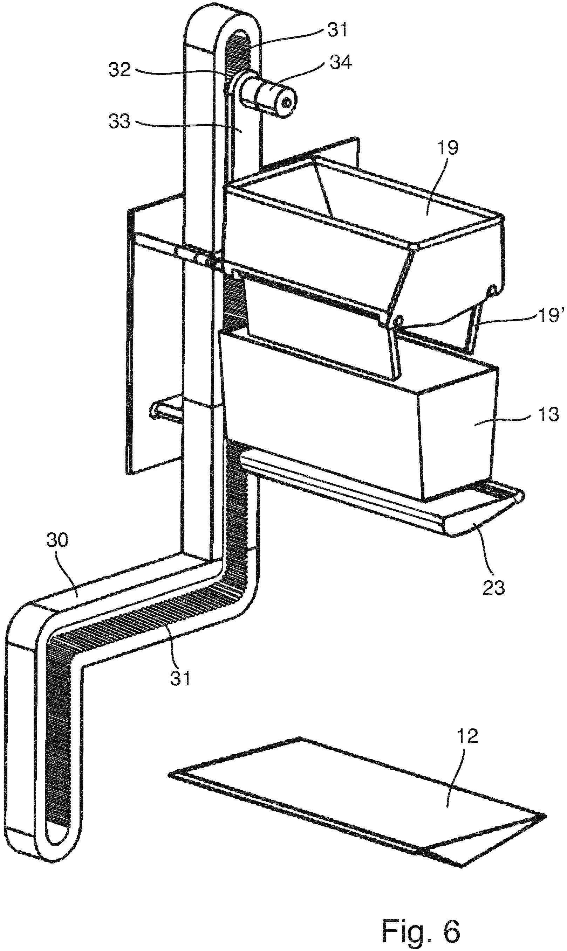

Figure 6 shows a second embodiment for the transport mechanism that moves the food basket 13 between the loading the cooking and the unloading positions. Same elements are identified with same reference numerals as in the first embodiment of figure 3. The transport mechanism in this second embodiment contains a guideway 30 with a curved gear rack 31 inside. A gear 32 driven by a small motor 34 engages with the curved gear rack 31 and moves up, sideways and down along the curved gear rack 31 upon activation of the motor 34. The food basket 13 suspends via a hinged arm 33 from the axis of the gear 32.

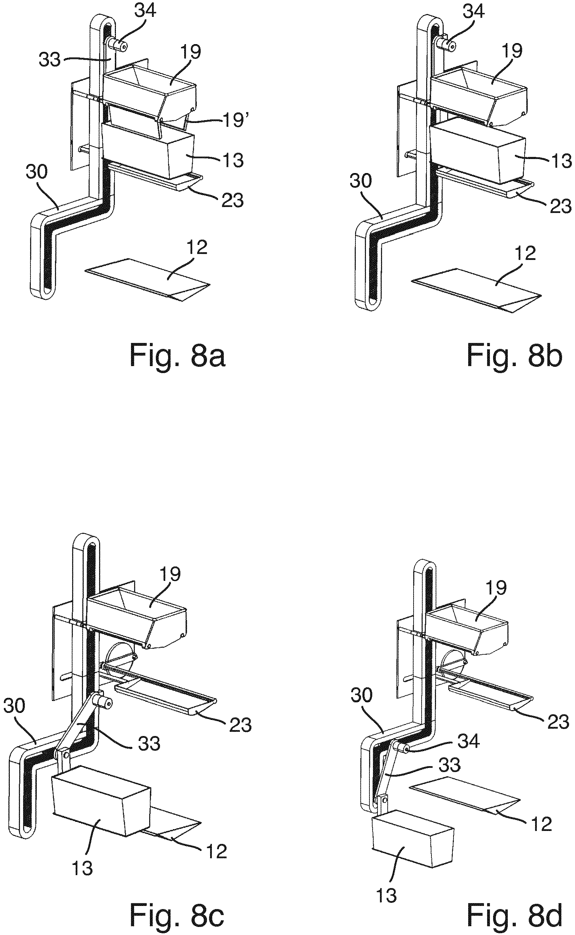

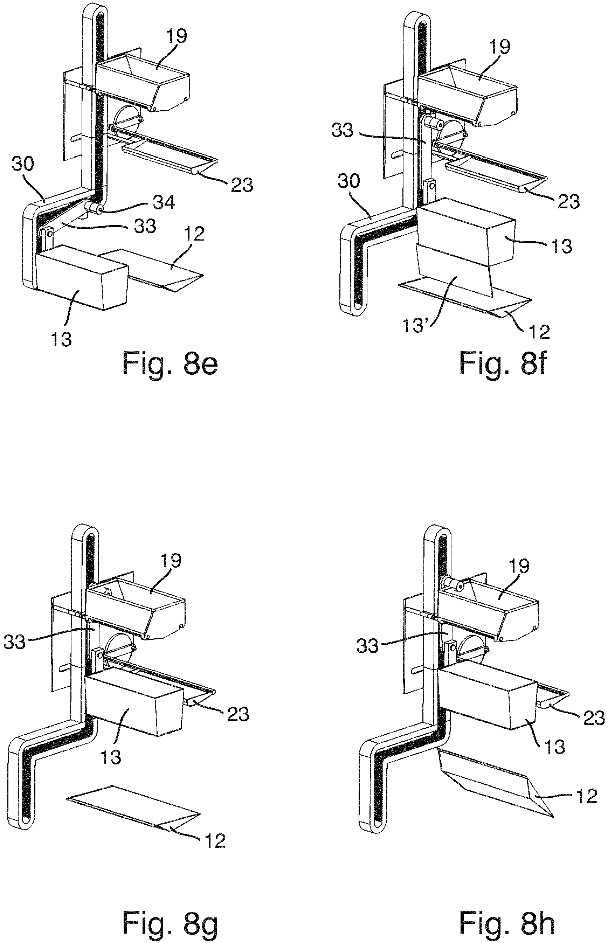

The gear 32 and hinged arm 33 is shown in more detail in figure 8. A guide pin 35 is attached to a middle hinge 34 of the hinged arm 33 and guided within the guideway 30 thus forming a sliding guide mechanism for increased stability.

In figures 8a to 8h show the food basket 13 and transport mechanism in different positions during a cooking cycle. In figure 8a, the food basket is shown in the loading position below the dispenser 19 with the debris catcher 23 placed below. In figure 8b, dispensing of food products is finished and the food basket 13 loaded. In figure 8c, the food basket 13 is shown now on its way from the loading position to the cooking position. In figure 8d, the food basket 13 has reached the cooking position and is immersed into deep-frying basin 16 (not shown). In figure 8e, the food basket has been lifted out of the frying basin 16 into a shaking position, where it is shaken by a fast rocking motion of the drive mechanism.

In figure 8f, the food basket 13 is shown in the unloading position with opened drop bottom 13' right above the dumping station 12. The debris catcher 23 has been shifted sideways to the rightmost position. In figure 8g, the food basket 13 is shown on its way upwards back into the loading position below the dispenser 19. The debris catcher 23 is still in its rightmost position, i.e. the inactive position. In figure 8h, the food basket 13 is still on its way up to the loading position but the dumping dumping station 12 implemented as a tiltable flat bowl, is tilted to the right to dispense the cooked food products into the hot air holding area 14. Once the food basket reaches the loading position and the debris catcher 23 is moved below the food basket 13, the next food preparation cycle can be started.

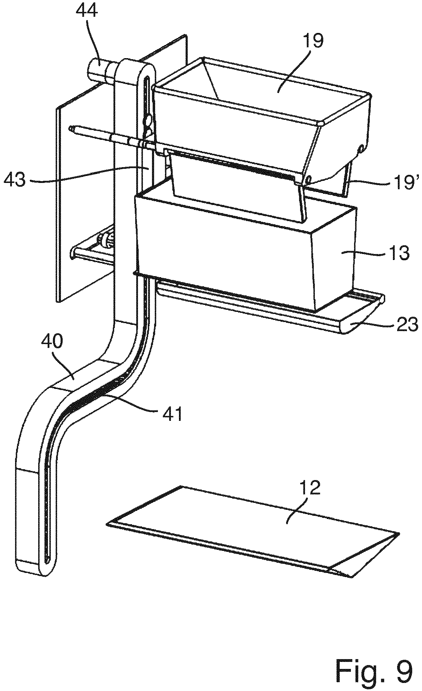

A third embodiment of the transport mechanism for the food basket 13 is shown in figure 9. Same elements are identified with same reference numerals as in previous embodiments. The transport mechanism has similar to the second embodiment a guideway or curved rail 40, which acts as a guide for a motion block 42. A belt 41 is tensioned in a loop along the curved rail 40 and the motion block 42 is slidably held between opposite back and forth guided strands of the looped belt. The food container 13 suspends from the motion block via an arm 43.

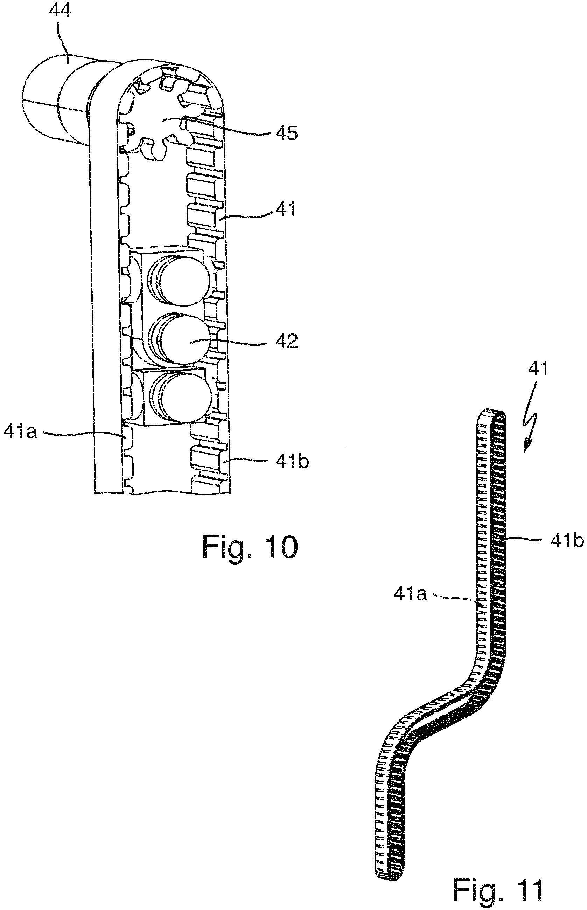

A detail of the looped belt 41 and motion block 42 is shown in figure 10. The belt 41 is implemented in this embodiment as a toothed belt and looped at its upper end around a drive pinion 45, which is driven by a motor 44. The motion block 42 is held between the left strand 41 a and the right strand 41 b of the belt 41. The motion block holds between the strands 41 a, 41 b of the belt 41 and moves when the belt is driven either by a ratchet mechanism, which engages with the teeth of the belt or by friction. In the latter case, in order to move the motion block, the friction between motion block and the two strands 41 a, 41 b of the belt will have to differ, which can be achieved for instance by oriented bristles or shingles at the contact faces of the motion block 42. The direction of movement of the motion block 42 can be changed by switching the drive direction of the belt 41. In case of a ratchet mechanism at the motion block 42, the direction of movement can also be simply changed by switching the ratchet mechanism.

The looped belt 41 with its back and forth guided strands is shown in figure 11 isolated. The belt 41 can be either held within the guiderail 40 by an edge guide arrangement, or can be supported at the turning points by guide rollers. Moreover, a pulley or belt tensioner can be used in addition to hold the looped belt tight and to thus hold the back and forth running strands 41 a, 41 b of the belt 41 substantially parallel to each other.

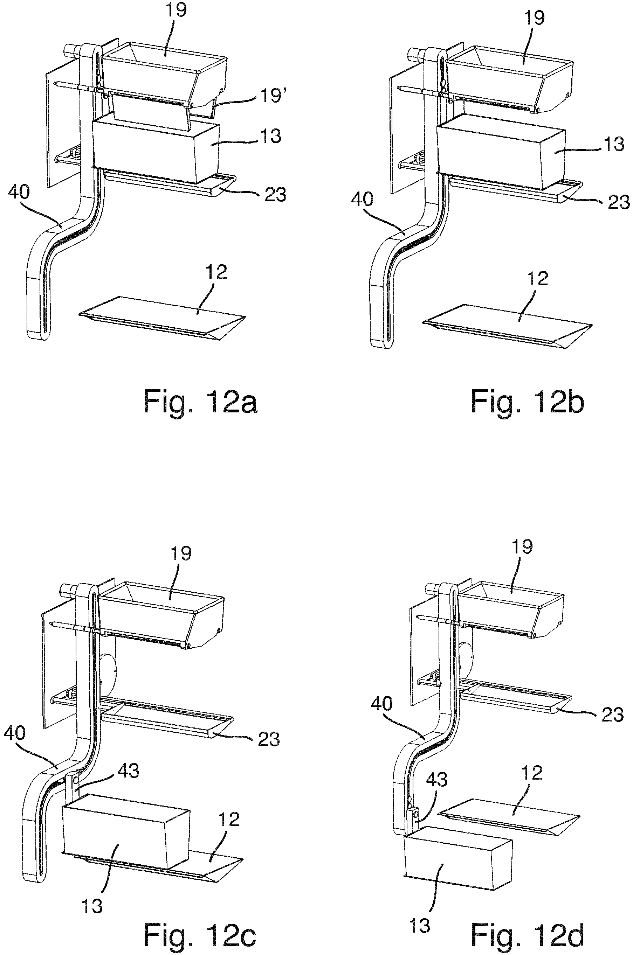

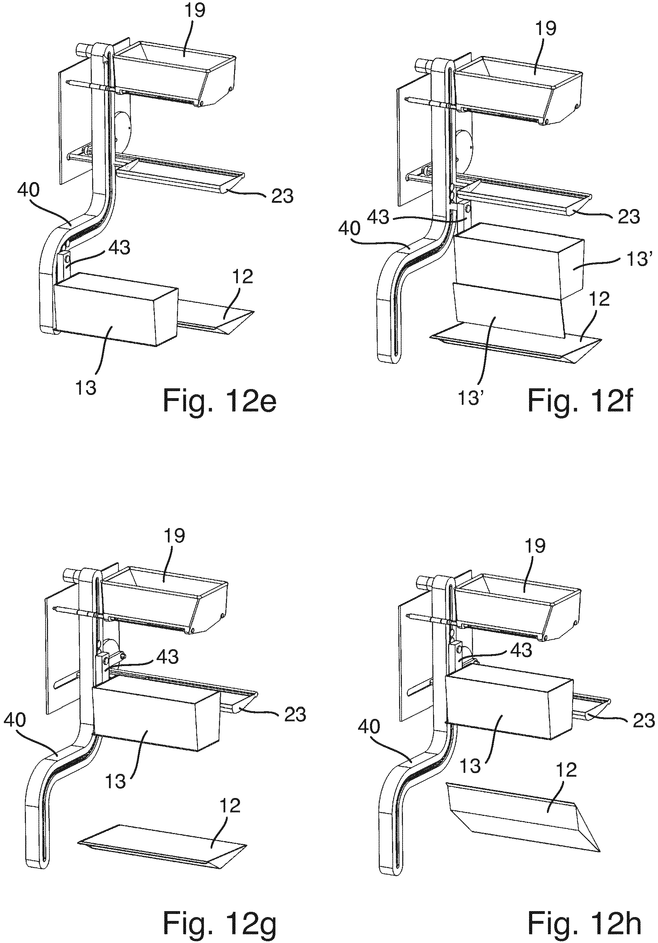

Various positions of the food basket 13 and transport mechanism of the third embodiment are shown in figures 12a to 12h, respectively. The positions are similar to the ones in figures 8a to 8h relating to the second embodiment, i.e. in figure 12a, the food basket is shown in the loading position. In figure 12b, dispensing of food products is finished and the food basket 13 loaded. In figure 12c, the food basket 13 is shown now on its way from the loading position to the cooking position. In figure 12d, the food basket 13 has reached the cooking position and is immersed into deep-frying basin 16 (not shown). In figure 12e, the food basket has been lifted out of the frying basin 16 into a shaking position, where it is shaken by a rocking motion of the drive mechanism. In figure 12f, the food basket 13 is shown in the unloading position with opened drop bottom 13' right above the dumping station 12. The debris catcher 23 has been shifted sideways to its rightmost position. In figure 12g, the food basket 13 is shown on its way upwards back into the loading position below the dispenser 19. In figure 12h, the dumping dumping station 12 implemented as a tiltable flat bowl is tilted to dispense the cooked food products into the hot air holding area 14.

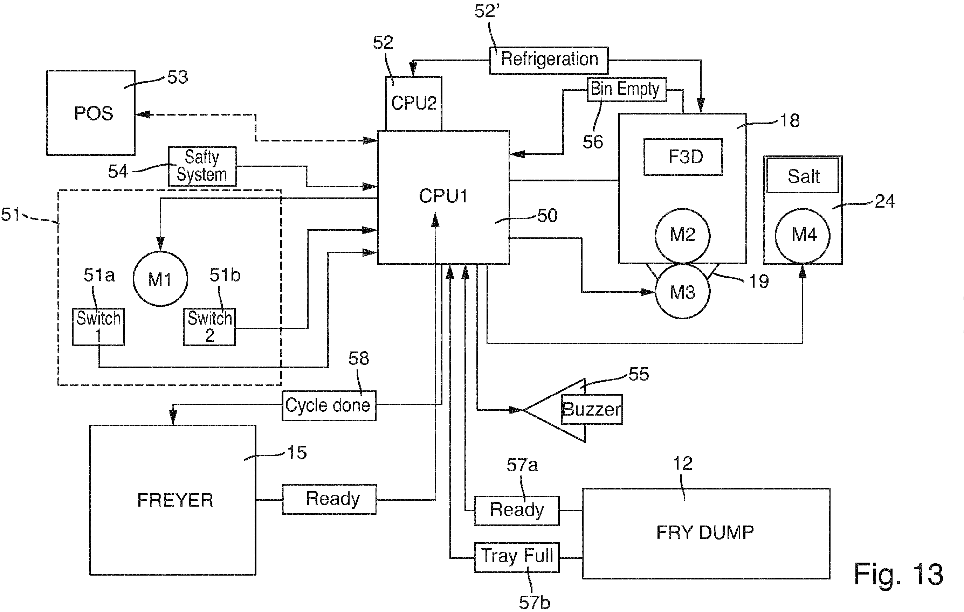

The cooking apparatus and in particular the transport mechanism for the food basket is controlled by a control system, such as the one shown schematically in a block diagram of figure 13. The control system preferably enables to define the basket positions, speed, time on each position, direction, basket shaking, temperature of the freezer, product dispensing method, e.g., by time and/or by weight, product availability, salting quantity, e.g., per time and/or weight, and alarms. The control system is thus programmed for the entire system operation, including control of refrigeration, product volume, product dispensing, frying, salting and dumping the product into a holding station. Operator choices may include a continuous automatic loop or a single cycle option. In other words, the control system can execute a permanent loop while is ON, or a single loop triggered by pressing a button or through an electric or digital command from a remote location in the restaurant. A digital command to start a cooking cycle can come for instance from the ordering system, which automatically can send a signal to the frying apparatus when it needs to prepare fresh fries.

The complete process cycle is:
dispense food into the basket 13, transport the basket 13 into the cooking apparatus 15, wait for time or command, shake product, at the end of the cooking process move to the salting area 12, salt, dump product into the holding 14 and then move basket 13 to the dispense area for next batch; the process can be executed in full or partially according with the programmed parameters to achieve the best performance and product quality.

In the control system of figure 13, the main element is the controller 50, which controls operation of the various other building blocks, including the transport system 51, the fryer 15, the dumping station 12, the freezer 18, the dispenser 19, and the salting system 24. One or more distributed additional CPUs such as CPU 52 can be used under the control or in cooperation with main controller 50. CPU 52 in this embodiment control the freezer temperature, for instance. The refrigeration signal 52' exchanged between CPU 52 and freezer 18 serves to control the target temperature of the freezer compartment and get status messages on the condition of the freezer.

In addition CPU 50 can be connected with the ordering system 53 of the restaurant, which will send a signal to the controller 50 when fresh food products need to be prepared. Further controller 50 can be connected to a safety system 54, which serves to protect of any injuries with humans through light barriers and contact switches. A buzzer 55 may also be connected to the controller 50 to output audible alarms to the service personnel.

The controller 50 controls the motor M1 of the transport system 51, for instance the motor of the spindle 21 in the first embodiment. The transport system 51 has switches 51 a, 51 b, which serves as position sensors and tell the controller the actual position of the food basket 13. Controller 50 controls the motor M1 of the transport system to transport food basket 13 from the dispense position into the cooking device and to the holding station 14. Motor M1 is shown by way of example, only, while as will be appreciated the transport system can include more than one motor controlled by controller 50.

Based on its position, the drop bottom 13' of the food basket 13 can be automatically opened, e.g. mechanically or electronically, and closed to load and dispense the food product.

The dispenser 19 has two motors M2, M3. A drum motor M2 rotates to move fries from the freezer compartment into a dispenser compartment and a motor M3 opens the flaps 19' of the dispenser compartment, as can be seen for instance in figures 5g, 8a, and 12a. Controller 50 can define the portions delivered by the dispenser 19, which can be by weight or dispensing time, for instance.

The automatic salting mechanism 24 is shown to have one further motor M4 that when activated by controller 50 will salt the food product in the dumping station 12 according to pre-programmed parameters such as volume and timing.

The freezer 18 may send a status signal "Bin empty" 56 to the controller 50. The dumping station 12 may send status messages "Ready" 57a and "Tray Full" 57b to the controller 50. The dumping station 12 will dump the cooked and salted product into the holding area 14.

With the signal "cycle done" 58, controller 50 tells the fryer 15 that the cooking cycle is complete. The fryer 15 may use this signal for reheat purpose and fry cycle count.

The above description and drawings merely illustrate the principles of the invention. It will thus be appreciated that those skilled in the art will be able to devise various arrangements that, although not explicitly described or shown herein, embody the principle of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors" or "CPUs", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, application specific integrated circuit (ASIC), field programmable gate array (FPGA), read only memory (ROM) for storing software, random access memory (RAM), and non-volatile storage. Other hardware, conventional and/or custom, may also be included. Any functional blocks of block diagrams shown in the figures are conceptual only. Their function may be carried out through the operation of program logic, through dedicated logic, or through the interaction of program control and dedicated logic, the particular technique being selectable by the implementer as more specifically understood from the context.

## Claims

1. An apparatus for automated preparation of cooked food products, comprising
a food container for holding said food product during preparation,
a dispensing station for controllably dispensing said food product to said food container,
a cooking device designed for at least partially accommodating said food container and for heating said food product held by said container;
a dumping station, to which the cooked food product is dropped from said food container, and
a conveyor mechanism for controllably conveying said food container between said dispensing station, said cooking device, and said dumping station.

2. An apparatus according to claim 1, wherein said dispensing station is arranged above said dumping station, wherein said cooking device is arranged laterally to said dumping station, and wherein said conveyor mechanism is arranged to convey said food container along a predefined trajectory extending in vertical and lateral direction.

3. An apparatus according to claim 1 or 2, wherein said food products are frozen food products and wherein a freezer is arranged in conjunction with said dispensing station for storing said frozen food products.

4. An apparatus according to any of the preceding claims, wherein said dispensing station is adapted to portion said food product by weight or by a dispensing time.

5. An apparatus according to any of the preceding claims, wherein food container has a drop bottom which is adapted to automatically open and close to dispense and load said food product based on the position of said food container at said conveying mechanism.

6. An apparatus according to any of the preceding claims, wherein said cooking device is a deep fryer.

7. An apparatus according to any of the preceding claims, comprising a control system which controls said conveyor mechanism to convey said food container to several pre-programmed positions.

8. An apparatus according to claim 7, wherein said control system is adapted to defining any of basket positions, dwell times on each position, a conveyor speed, a conveyor direction, a basket shaking, a temperature of a freezer, a product dispensing time, and/or a product dispensing weight, and/or
wherein said control system is adapted to monitor product availability, and/or alarms, and/or
wherein said control system is adapted to control a temperature, a product volume, and/or a product availability within a freezer arranged for storing said food product.

9. An apparatus according to claim 7 or 8, wherein said control system is programmed to execute a permanent loop of cooked food production while being in an active state, or a single loop upon receipt of a trigger signal.

10. An apparatus according to any of the preceding claims, further comprising an automatic salting mechanism arranged for salting said food product in accordance with at least one programmable parameter.

11. An apparatus according to any of the preceding claims, wherein said dumping station is tiltable to deliver food products to a heat-retaining food holding area or wherein said dumping station comprises a dump mechanism for dumping said food product into a food holding area.

12. An apparatus according to any of the preceding claims, wherein said conveyor mechanism comprises a rotary column with a vertically movable lifting arm, pivotably connected to said rotary column, which lifting arm holds said food container; said lifting arm preferably comprising a gear for turning said food container to maintain an orientation of said food container when said lifting arm pivots around said rotary column.

13. An apparatus according to any of the preceding claims, wherein said conveyor mechanism comprises a guideway with a gear rack curved along said guideway and a gear which engages with said gear rack and wherein said food container suspends from a gear link attached to said gear.

14. An apparatus according to any of the preceding claims, wherein said conveyor mechanism comprises a curved rail, a belt tensioned in a loop along said curved rail and a motion block slidably held between back and forth guided strands of said belt and wherein said food container suspends from said motion block, said motion block preferably being held between said back and forth guided strands of said belt by friction and/or by a ratchet mechanism.

15. An apparatus according to any of the preceding claims, further comprising a debris catcher arranged to catch debris of frozen food products falling through perforations of said food container when said food product is being dispensed by said dispensing station into said food container; said debris catcher preferably being movable in lateral direction.
